# EUROPÄISCHE PATENTSCHRIFT

(11) **EP 0 837 780 B1**
(45) Veröffentlichungstag und Bekanntmachung des Hinweises auf die Patenterteilung: **07.11.2001**
(21) Anmeldenummer: 97925851.4
(22) Anmeldetag: 15.05.1997
(51) Int. Cl.: B60B 33/00

(54) **VON HAND BEWEGBARER TRANSPORTWAGEN**
HAND MOVABLE TRANSFER CART
CHARIOT TRANSPORTEUR DEPLACABLE MANUELLEMENT

(30) Priorität: 15.05.1996 DE 19619579; 18.10.1996 DE 19643121
(43) Veröffentlichungstag der Anmeldung: 29.04.1998
(73) Patentinhaber: Wanzl Metallwarenfabrik GmbH, 89336 Leipheim (DE)
(72) Erfinder: WANZL, Rudolf, D-89340 Leipheim (DE)
(86) Internationale Anmeldenummer: DE9701013
(87) Internationale Veröffentlichungsnummer: WO9743135

(56) Entgegenhaltungen:
- EP-A- 0 190 376
- EP-A- 0 242 756
- DE-A- 2 548 646
- DE-A- 3 410 536
- DE-B- 2 543 211
- DE-U- 8 511 713
- DE-U- 9 216 608
- FR-A- 2 529 139
- FR-A- 2 581 933
- GB-A- 1 422 365

## Beschreibung

Die Erfindung betrifft einen von Hand bewegbaren Transportwagen, dessen Fahrgestell mit Achsstücken ausgestattet ist und jedes Achsstück mit Hilfe eines Befestigungsabschnittes am Fahrgestell angeschweißt ist, wobei jedes Achsstück einen nach unten gerichteten, auf einer vertikalen Achse gelegenen Achsabschnitt aufweist und wobei auf jedem Achsabschnitt eine Lenkrolle aufgesteckt und durch ein biegeelastisches Sicherungsmittel gegen Lösen gesichert ist.

Die europäische Patentanmeldung EP 0 242 756 A3 beschreibt einen derartigen, als Einkaufswagen gestalteten Transportwagen. Dessen Fahrgestell weist je zwei verschiedene Achsstücke auf, welche die Lenkrollen tragen. Die am Fahrgestell hinten angeordneten Achsstücke sind Bestandteil je eines vierfach gebogenen Drahtrahmens. Die beiden Drahtrahmen sind zum Tragen des Korbes des Einkaufswagens bestimmt. Zu diesem Zweck sind die Drahtrahmen über senkrechte Befestigungsabschnitte mit den Längsseiten des Fahrgestelles verschweißt, wobei die hinteren Abschnitte über die Längsseiten hinaus nach unten verlängert sind und je einen nach unten gerichteten Achsabschnitt zum Aufstecken je einer Lenkrolle bilden. An der Vorderseite des Fahrgestelles sind zwei weitere Achsstücke vorgesehen, die ebenfalls mittels eines Befestigungsabschnittes am Fahrgestell angeschweißt sind und mit ihren nach unten gerichteten Achsabschnitten je eine Lenkrolle tragen.
Die Lenkrollen sind auf die Achsabschnitte von unten her aufgesetzt und durch ein Sicherungsmittel in Form eines Axialhalteringes gegen Lösen gesichert. Der Zeichnung ist zu entnehmen, daß der Durchmesser der Achsabschnitte dem Durchmesser der Befestigungsabschnitte entspricht. Ferner ist der Abstand der Schweißstellen gleich dem Abstand der beiden Längsdrähte, welche die Längsseiten des Fahrgestelles bilden. Auf den ersten Blick mag die vorgeschlagene Lösung frappierend einfach sein, doch wenn man weiß, daß bei aus Draht gefertigten Fahrgestellen die Drahtstärke mit maximal 14 mm festgelegt ist und die Drähte aufgrund ihrer Eigenschaft, sich biegen zu lassen, keine übermäßige Biegefestigkeit aufweisen, erkennt man rasch die Nachteile der vorgeschlagenen Lösung. Da als Einkaufswagen gestaltete Transportwagen sehr rauhen Bedingungen ausgesetzt sind und starke Stöße gegen die Lenkrollen wirken können, besteht die Gefahr, daß sich entweder die Achsabschnitte der Achsstücke im Laufe der Zeit verbiegen oder daß die beiden entlang einer Geraden angeordneten Schweißstellen brechen können. Diese Gefahr besteht insbesondere bei großen Einkaufswagen, deren Körbe über 200 Liter Rauminhalt aufweisen können und beladen entsprechend schwer sind. Verbiegen sich die Achsabschnitte, leidet die Schwenkbeweglichkeit der Lenkrollen. Brechen die Schweißstellen, ist der Transportwagen nicht mehr zu gebrauchen.
Die Lenkrollen des eben beschriebenen Transportwagens weisen zwei Gabelschenkel auf, die über eine Wandbrücke verbunden sind und die Achse für das Laufrad tragen. Die Gabelschenkel sind an einem separaten Gabelkopf befestigt, der aus zwei sich ergänzenden Kopfstücken gebildet ist. Der Gabelkopf umgreift einen Achszapfen zusammen mit einem beim Zusammensetzen der Kopfstücke sich bildenden Lagerelement. Neben der relativ großen Bauteilevielfalt besteht ein besonderer Nachteil dieser Lenkrolle darin, daß zur Montage am Achszapfen ein Bolzen durch die Gabelschenkel und durch das geteilte Lagerelement hindurchgeführt und anschließend die Enden des Bolzens angestaucht werden müssen. Diese Art der Montage ist umständlich, zeitraubend und deshalb teuer.

In der deutschen Offenlegungsschrift DE-OS 25 48 646.8 ist ein gattungsgemässes, abnehmbares Rollfahrwerk beschrieben, das sich mit Hilfe eines Anschlusselementes beispielsweise an der Unterseite eines Gepäckstückes befestigen läßt, wobei eine Schwenkrolle mittels einer im wesentlichen rechteckigen Platte am Anschlusselement befestigbar ist. Die Schwenkrolle läßt sich um ein vertikal angeordnetes Achsstück verschwenken, wobei das Achsstück entweder Bestandteil des Anschlusselementes oder der Radgabel oder als eigenständiger Bolzen gestaltet ist, welcher den oberen Bereich der Radgabel und das Anschlusselement durchdringt. Ein Sicherungsmittel verhindert, daß sich die Schwenkrolle vom Anschlusselement löst. Entfernt man das Sicherungsmittel, zerfällt das Rollfahrwerk je nach Ausführungsbeispiel in mehr oder weniger einzelne Teile, was bedeutet, daß umgekehrt zum Aufbau und zum Befestigen des Rollfahrwerkes an einem Gegenstand mehrere Montageschritte erforderlich sind, die sich als zeitraubend und daher ebenfalls als kostenintensiv erweisen.

Es ist Aufgabe der Erfindung, einen Transportwagen der gattungsgemäßen Art so weiterzuentwickeln, daß die aufzufindende Lösung eine schnelle und billige Montage der Lenkrollen erlaubt.

Die Lösung der Aufgabe besteht darin, daß die Lenkrollen als fertige Baueinheiten vorliegen, deren Schwenklager als Rillenkugellager oder als Rollenlager ausgebildet sind, daß jede Lenkrolle entlang der vertikalen Achse ein minimales Stück auf- und abbewegbar angeordnet ist und daß die Sicherungsmittel zum selbsttätigen Verrasten mit den Achsstücken bestimmt sind.

Während bei dem zum Stand der Technik zählenden, gemäß der EP 0 242 756 A3 ausgebildeten Transportwagen die Querschnittsflächen der Grundrisse von Achsabschnitt und Befestigungsabschnitt gleich sind, ist beim erfindungsgemäßen Transportwagen die Querschnittsfläche des Grundrisses des Befestigungsabschnittes größer als jene des Achsabschnittes. Damit erhält der Fachmann die Möglichkeit, auf verschiedenste Art und Weise die Lage der Schweißstellen zwischen Befestigungsabschnitt und Fahrgestell so zu wählen, daß Achsstücke nicht mehr vom Fahrgestell abbrechen können. Insbesondere besteht die Möglichkeit, die Schweißstellen pro Befestigungsabschnitt so anzuordnen, daß diese nicht nur, wie beim Stand der Technik, auf einer Geraden liegen, sondern eine ebene oder unebene Fläche einschließen, so daß sich das Widerstandsmoment einer derart gewählten Schweißverbindung erhöhen läßt. Ferner ist es durch die Wahl von separaten Achsstücken möglich, den Durchmesser der Achsabschnitte mindestens 14 mm zu wählen, da die Achstücke nicht mehr aus Draht gefertigt sind. Somit läßt sich für die Achsstücke auch ein Werkstoff wählen, der neben guten Schweißeigenschaften auch eine höhere Biegefestigkeit aufweist als aus Draht gefertigte Achsstücke. Die Achsstücke können deshalb größere Stoßkräfte aufnehmen, ohne daß sie verbogen werden. Ein weiterer Vorteil besteht darin, daß anstelle von aus Kunststoff bestehenden Gleitlagern, wie in der EP 0 242 756 A3 vorgeschlagen, nunmehr aus Stahl gefertigte Rillenkugellager oder Rollenlager vorgesehen sind, die imstande sind, höhere Kräfte aufzunehmen als aus elastischem Kunststoff bestehende Lager. Ein Ausschlagen von aus Stahl gefertigten Lagern ist erheblich weniger zu befürchten, als dies bei aus Kunststoff bestehenden Gleitlagern möglich ist.
Die vorgeschlagene Lösung erlaubt ferner in vorteilhafter Weise eine Montage der als fertige Baueinheiten vorliegenden Lenkrollen in kürzester Zeit, denn es genügt ein Ansetzen der Lenkrollen an den Achszapfen und ein anschließender kurzer, in Längsrichtung des Achszapfens gerichteter Schlag auf eine Lenkrolle, um diese am Achszapfen zu befestigen und zu arretieren. Das an der Radgabel ortsfest angeordnete, wenigstens eine Sicherungsmittel rastet dabei von selbst in eine am Achszapfen befindliche ringförmige Rille ein, so daß die Lenkrolle gesichert ist. Irgendwelche sonstige, mit dem Sicherungsmittel erforderliche Montagemöglichkeiten, etwa solche, wie durch den Stand der Technik bekannt, sind nicht mehr erforderlich.

Die Erfindung wird anhand von Ausführungsbeispielen näher erläutert. Es zeigt
- Fig. 1: einen als Einkaufswagen gestalteten Transportwagen mit vier auf Achsstücke aufgesetzten Lenkrollen;
- Fig. 2: bis Fig. 4 verschiedene Befestigungsmöglichkeiten eines Achsstückes am Fahrgestell des Transportwagens;
- Fig. 5: eine Lenkrolle, deren Schwenklager durch ein Rillenkugellager gebildet ist, sowie
- Fig. 6: eine Lenkrolle mit einem aus Lagerscheiben gebildeten Schwenklager, ebenfalls auf einem Achsstück angeordnet.

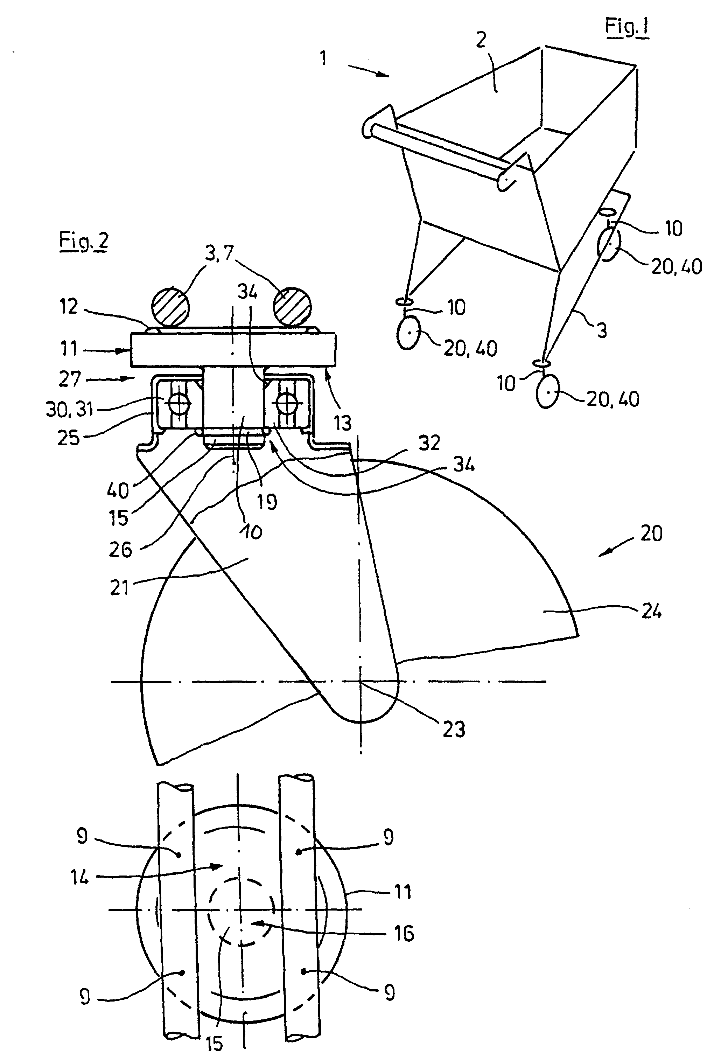

Der in Fig. 1 dargestellte, von Hand bewegbare Transportwagen 1 weist ein Fahrgestell 3 auf, das eine Einrichtung 2 zum Transport von Ware trägt.

Der Transportwagen 1 kann unterschiedlichst gestaltet sein. Seine Form ist für die Erfindung im Grunde unwesentlich, jedoch weist das Fahrgestell 3 Achsstücke 10 auf, die am Fahrgestell 3 angeschweißt sind und auf die je eine Lenkrolle 20 aufgesteckt und durch Sicherungsmittel 40 gegen Lösen gesichert ist.

Bei den in den Fig. 2 bis 4 dargestellten Beispielen ist immer zur Vorderansicht noch die Draufsicht eingezeichnet. Das Fahrgestell 3 ist dabei entweder durch die Darstellung von Drähten 7 oder durch ein Rohr 8 angedeutet, wobei die Drähte 7 oder die Rohre 8 geradlinig und oder gebogen gestaltet sein können.

Fig. 2 zeigt zwei Drähte 7 des Fahrgestelles 3 und ein Achsstück 10 mit aufgesetzter Lenkrolle 20. Das Achsstück 10 weist einen Befestigungsabschnitt 11 auf, der eine horizontal angeordnete ringförmige Erhebung 12 besitzt, auf welche die beiden Drähte 7 durch Punktschweißung aufgesetzt und verbunden sind. Der Befestigungsabschnitt 11 ist als Scheibe gestaltet, wobei die beiden Drähte 7 die ringförmige Erhebung 12 so schneiden, daß vier Schweißstellen 9 gebildet sind, die eine Ebene einschließen. Die so geschaffene Vierpunktauflage ergibt eine äußerst stabile Schweißverbindung. Anstelle einer ringförmigen Erhebung 12 können auch punktuelle Erhebungen 12 vorgesehen sein. An der Unterseite 13 des Befestigungsabschnittes 11 ist ein Achsabschnitt 15 mit zylindrischem Querschnitt angeformt. Der Achsabschnitt 15 ist nach unten gerichtet. In der Draufsicht erkennt man, daß der Querschnitt 14 oder auch die Querschnittsfläche des Grundrisses des Befestigungsabschnittes 11 größer ist als der Querschnitt 16 bzw. die Querschnittsfläche des Grundrisses des Achsabschnittes 15. Auf den Achsabschnitt 15 ist ein aus Stahl gefertigtes Rillenkugellager 31 aufgesetzt und durch ein in einer umlaufenden Rille 19 am Achsabschnitt 15 befindliches Sicherungsmittel 40, beispielsweise eines federnden Axialhalteringes abgestützt und gegen Lösen gesichert. Das Rillenkugellager 31 stützt sich somit am Achsabschnitt 15 und an einem Sicherungsmittel 40 ab. Das Rillenkugellager 31 ist in bekannter Weise ortsfest in ein Lagergehäuse 25 einer Radgabel 21 eingesetzt, das ein um eine horizontale Achse 23 drehbares Rad 24 trägt. Die so gestaltete Lenkrolle 20 läßt sich um ihr als Rillenkugellager 31 gestaltetes Schwenklager 30 um eine vertikale Achse 26 verschwenken, die identisch ist mit der Längsachse des Achsstückes 15. Die Innenfase 34 des Innenrings 32 des Rillenkugellagers 31 ist am oberen, dem Befestigungsabschnitt 11 benachbarten Ende stark abgerundet oder abgeschrägt, während die Innenfase 34 des Innenrings 32 am unteren Ende, das an das Sicherungsmittel 40 anschlägt, scharfkantig ausgebildet ist, so daß der Innenring 32 am ringförmigen, aus Federstahl bestehenden, geschlitzten Sicherungsmittel 40 besser abgestützt ist. Die Lenkrolle 20 wird von unten her auf den Achsabschnitt 15 aufgesetzt. Dabei erleichtert die stark abgerundete Innenfase 34 das Aufsetzen auf den Achsabschnitt 15 und drückt das Sicherungsmittel 40 in die am Achsabschnitt 15 befindliche horizontal angeordnete Rille 19, so daß der obere Abschluß 27 des Lagergehäuses 25 beim Aufstecken an die Unterseite 13 des Befestigungsabschnittes 11 anstößt, während gleichzeitig das Sicherungsmittel 40 entspannt wird, sich radial nach außen etwas vergrößert und eine Stütze für den Innenring 32 des Rillenkugellagers 31 bildet. Der Abstand zwischen der Unterseite 13 des Befestigungsabschnittes 11 und des Sicherungsmittels 40 ist so gewählt, daß die eingespannte Lenkrolle 20 entlang der vertikalen Achse 26 ein minimales Stück auf- und abbewegt werden kann. Die Lenkrolle 20 entspricht in ihrer Bauweise in etwa jener Lenkrolle, die in der DE 25 43 211.5 beschrieben ist.

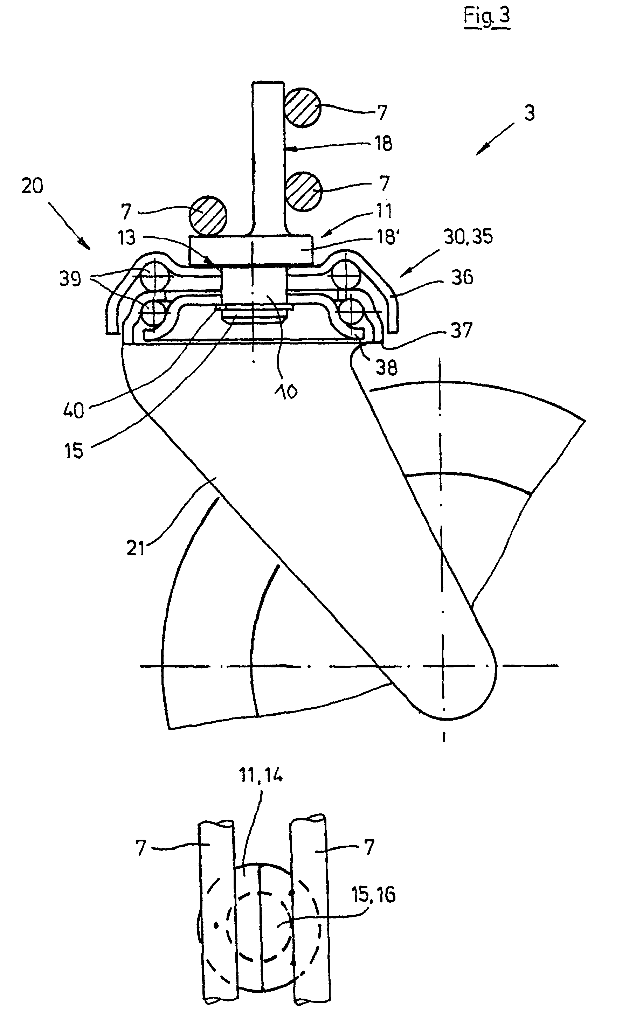

Fig. 3 zeigt eine mit einem Rollenlager 35 ausgestattete Lenkrolle 20, die auf ein Achsstück 10 aufgesteckt ist. Das Fahrgestell 3 ist durch drei Drähte 7 dargestellt. Der Befestigungsabschnitt 11 des Achsstückes 10 erinnert an ein umgekehrt angeordnetes "T", wobei an dem nach oben gerichteten Abschnitt 18 zwei Drähte 7 und am horizontalen Abschnitt 18' ein Draht 7 angeschweißt sind. Das Beispiel soll verdeutlichen, daß es eine Vielzahl von Möglichkeiten gibt, den Befestigungsabschnitt 11 so zu gestalten, daß eine äußerst stabile Verbindung zwischen dem Achsstück 10 und dem Fahrgestell 3 des Transportwagens 1 möglich ist. Der Querschnitt 14 des Grundrisses des Befestigungsabschnittes 11, vgl. Draufsicht, ist größer als der Querschnitt 16 des Grundrisses des Achsabschnittes 15, auf den die Lenkrolle 20 aufgesteckt und durch ein Sicherungsmittel 40 gegen Lösen gesichert ist. Die Lenkrolle 20 entspricht, die Einsteckhalterung ausgeschlossen, in etwa jenen Lenkrollen, wie sie im deutschen Gebrauchsmuster G 92 16 608.3 beschrieben sind. Das aus Stahl bestehende Rollenlager 35, welches als Schwenklager 30 wirkt, ist in bekannter Weise durch Lagerscheiben 36, 37, 38 gebildet, die mit Hilfe von Stahlkugeln 39 und mit der Radgabel 21 zu einer Baueinheit zusammengefügt sind. Die obere Lagerscheibe 36 ist an der oberen Innenseite etwas angefast, so daß sich die Lenkrolle 20 von unten her in gleicher Weise auf den Achsabschnitt 15 aufstecken läßt, wie vorab beschrieben. Auch hier weicht das Sicherungsmittel 40 so aus, daß die Lenkrolle 20 so weit aufgesteckt werden kann, daß sie an der Unterseite 13 des Befestigungsabschittes 11 anschlägt, während sich dabei das Sicherungsmittel 40 entspannt und sich sperrend der Lenkrolle 20 in den Weg stellt, so daß sich die Lenkrolle 20 nicht mehr vom Achsstück 10 lösen kann.

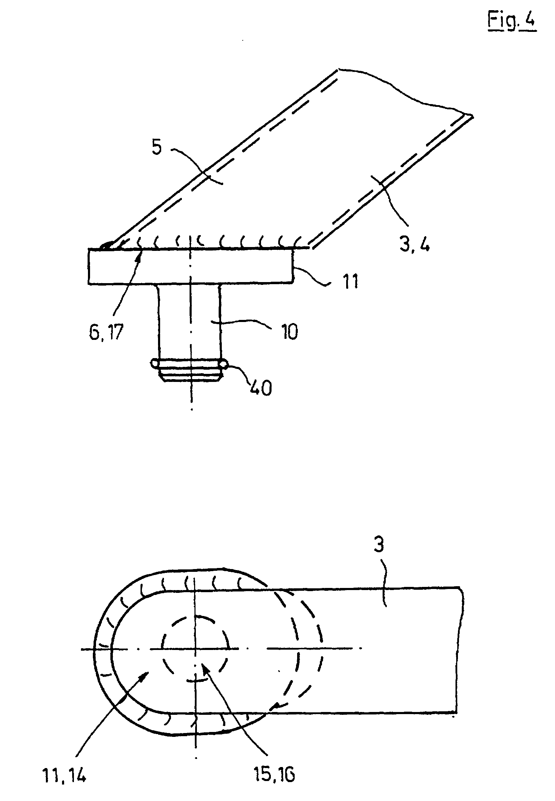

Fig. 4 zeigt eine weitere Möglichkeit, wie ein Achsstück 10 mit einem Fahrgestell 3 verbunden werden kann. Das Fahrgestell 3 weist in bekannter Weise zwei Längsholme 4 auf, von denen einer ausschnittsweise gezeigt ist. Das untere Ende des aus einem Halbrundrohr 5 bestehenden Längsholmes 4 ist durch eine ebene horizontale Schnittfläche 6 gebildet. Der Befestigungsabschnitt 11 des Achsstückes 10 schließt nach oben ebenfalls mit einer ebenen horizontal angeordneten Fläche 17 ab, so daß der Längsholm 4 mit seiner Schnittfläche 6 plan aufgesetzt und mit dem scheibenförmigen Befestigungsabschnitt 11 verschweißt werden kann. In der Draufsicht erkennt man wieder, daß der Querschnitt 14 des Grundrisses des Befestigungsabschnittes 11 größer ist als der Querschnitt 16 des Grundrisses des Achsabschnittes 15, auf den wieder eine der beiden vorab genannten Lenkrollen 20 in der ebenfalls vorab beschriebenen Weise aufsteckbar ist.

Es ist ratsam, bei punktueller Schweißung (Fig. 2 und 3) die Abstände der Schweißstellen 9 größer zu wählen als den Durchmesser des Achsabschnittes 15. Ebenso ist es empfehlenswert, bei einer Nahtschweißung (Fig. 4) die Länge der Schweißnaht größer zu wählen als den Durchmesser des Achsabschnittes 15.

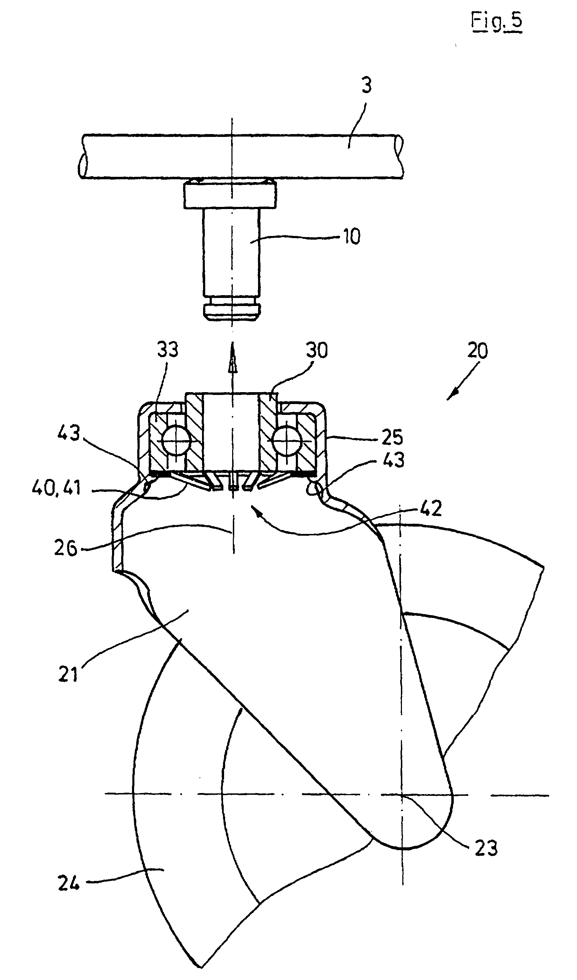

Die in Fig. 5 dargestellte Lenkrolle 20 orientiert sich in ihrer Bauweise an der in Fig. 2 beschriebenen Lenkrolle. An der Unterseite des Schwenklagers 30, und an dessen Außenring 33 anliegend, ist wenigstens ein Sicherungsmittel 40 in Form einer aus Federstahl bestehenden gezahnten zylindrischen Scheibe vorgesehen, deren Zähne 41 radial von außen nach innen streben und mittig, auf der vertikalen Achse 26 der Lenkrolle 20 gelegen, eine vorbestimmte Öffnung 42 bilden. Das wenigstens eine Sicherungsmittel 40 ist zwischen dem Schwenklager 30 und mindestens einem weiteren, an der Radgabel 21 vorgesehenen, zum Befestigen des Schwenklagers 30 bestimmten Stützmittel 43 eingespannt und dadurch ortsfest gehalten. Das mindestens eine Stützmittel 43 ist entweder durch einen ringförmigen Wulst gebildet, der beim Montagevorgang des Schwenklagers 30 und des Stützmittels 43 aus der Innenwand des Lagergehäuses 25 herausgearbeitet bzw. gerollt wird oder als Stützmittel 43 sind kerbartige Vorsprünge vorgesehen, die in bekannter Weise punktförmig aus der Innenwand des Lagergehäuses 25 herausgedrückt sind. Auf diese Weise sind das Schwenklager 30 und das wenigstens eine Sicherungsmittel 40 ortsfest im Lagergehäuse 25 fixiert. Da die Verspannung des Schwenklagers 30 nur über dessen Außenring 33 erfolgt, kann sich der Innenring 32 drehen.
Über der Lenkrolle 20 ist in der Zeichnung ein an einem Transportwagen 1 ortsfest angeordnetes Achsstück 10 dargestellt, auf das die Lenkrolle 20 in Pfeilrichtung aufsteckbar ist. Beim Aufstecken durchdringt das Achsstück 10 passgenau den Innenring 32 des Schwenklagers 30. Dabei greifen die Zähne 41 des Sicherungsmittels 40 sperrend in die Rille 19 des Achsstückes 10 so ein, daß die Lenkrolle 20, mit ihrer oberen Begrenzung 29 an dem am Achsstück 10 befindlichen Befestigungsabschnitt 11 sich abstützend, mit Hilfe des wenigstens einen Sicherungsmittels 40 zwischen dem Sicherungsmittel 40 und dem Befestigungsabschnitt 11 gegen axiales Verschieben gesichert, am Achsstück 10 befestigt ist.

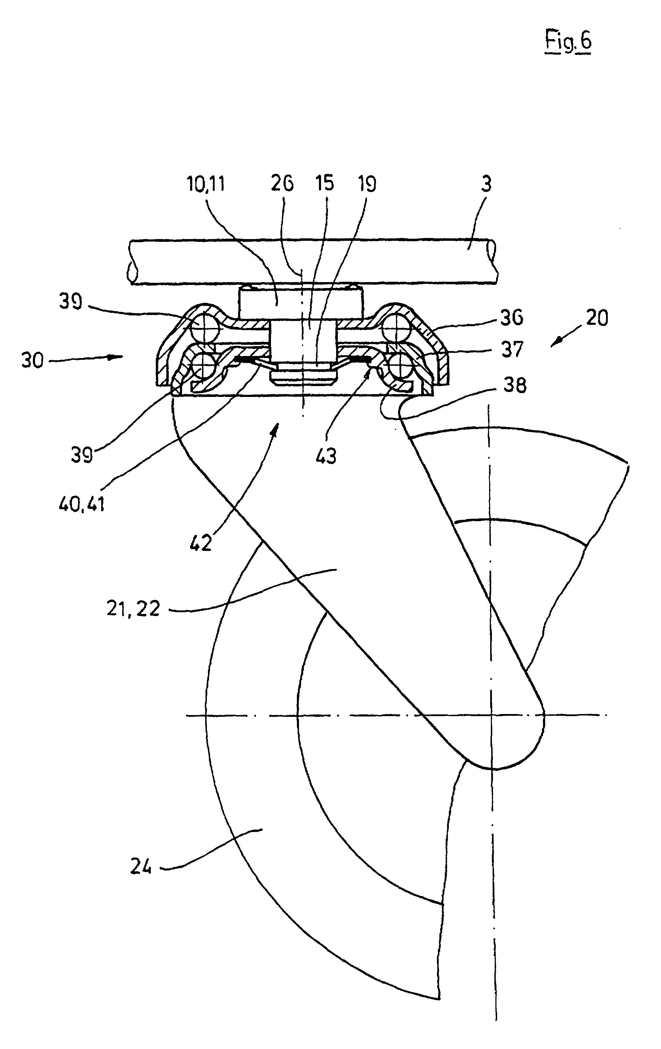

Auf gleiche Weise ist gemäß Fig. 6 eine Lenkrolle 20 am Achszapfen 10 befestigt, die bereits in Fig. 3 näher beschrieben wurde. An der unteren Laufscheibe 38 ist ein Sicherungsmittel 40 in Form einer mit Zähnen 41 ausgestatteten, aus Federstahl bestehenden Scheibe plan angelegt und mit gleichen oder ähnlichen Stützmitteln 43 ortsfest befestigt. Auch bei dieser Art von Lenkrolle 20 ist das wenigstens eine Sicherungsmittel 40 zwischen dem Schwenklager 30 und mindestens einem weiteren, an der Radgabel 21 vorgesehenen, zum Befestigen des Schwenklagers 30 bestimmten Stützrnittel 43 eingespannt und gehalten. Die radial nach innen gerichteten und die vorbestimmte Öffnung 42 bildenden Zähne 41 des Sicherungsmittels 40 stützen sich auch bei diesem Ausführungsbeispiel an der ringförmigen Rille 19 des Achsstückes 10 ab. Nach oben liegt das Schwenklager 30 mit seiner oberen Laufscheibe 36 am Befestigungsabschnitt 11 des an einem Transportwagen 1 befindlichen Achsstückes 10 an. Die mittlere Lagerscheibe 37 wird in bekannter Weise durch den Rücken gebildet, der die beiden Gabelschenkel 22 verbindet.
Anstelle von nur einem Sicherungsmittel 40 können, sofern es für die Erfindung dienlich ist, auch mehr als ein Sicherungsmittel 40 vorgesehen sein. Ebenso können anstelle von mindestens einem Stützmittel 43, das aus der Radgabel 21 herausgearbeitet ist, auch separat anzubringende bekannte Stützmittel 43 wie Sicherungsringe, Federscheiben oder ähnliches vorgesehen sein, die in vorbestimmte Vertiefungen einrasten.

## Patentansprüche

1. Von Hand bewegbarer Transportwagen (1), dessen Fahrgestell (3) mit Achsstücken (10) ausgestattet ist und jedes Achsstück (10) mit Hilfe eines Befestigungsabschnittes (11) am Fahrgestell (3) angeschweißt ist, wobei jedes Achsstück (10) einen nach unten gerichteten, auf einer vertikalen Achse (26) gelegenen Achsabschnitt (15) aufweist, wobei auf jedem Achsabschnitt (15) eine Lenkrolle (20) aufgesteckt und durch ein biegeelastisches Sicherungsmittel (40) gegen Lösen gesichert ist und wobei der Querschnitt eines jeden Befestigungsabschnittes (11) größer ist als der Querschnitt des sich anschließenden Achsabschnittes (15), **dadurch gekennzeichnet, daß** die Lenkrollen (20) als fertige Baueinheiten vorliegen, deren Schwenklager (30) als Rillenkugellager (31) oder als Rollenlager (35) ausgebildet sind, daß jede Lenkrolle (20) entlang der vertikalen Achse (26) ein minimales Stück auf- und abbewegbar angeordnet ist und daß die Sicherungsmittel (40) zum selbsttätigen Verrasten mit den Achsstücken (10) bestimmt sind.

2. Transportwagen (1) nach Anspruch 1, **dadurch gekennzeichnet, daß** bei punktuellem Anschweißen der Achsstücke (10) am Fahrgestell (3) die Abstände der Schweißstellen (9) größer sind als der Durchmesser des Achsabschnittes (15).

3. Transportwagen (1) nach Anspruch 1, **dadurch gekennzeichnet, daß** bei einem Anschweißen der Achsstücke (10) am Fahrgestell (3) durch wenigstens eine Schweißnaht pro Achsstück (10) die Länge der wenigstens einen Schweißnaht größer ist als der Durchmesser des Achsabschnittes (15).

4. Transportwagen (1) nach einem der Ansprüche 1 bis 3, **dadurch gekennzeichnet, daß** am Befestigungsabschnitt (11) Erhebungen (12) vorgesehen sind, die zur Bildung der Schweißstellen (9) bestimmt sind.

5. Transportwagen (1) nach einem der Ansprüche 1 bis 4, **dadurch gekennzeichnet, daß** der Befestigungsabschnitt (11) scheibenförmig gestaltet ist.

6. Transportwagen (1) nach einem der Ansprüche 1 bis 4, **dadurch gekennzeichnet, daß** der Befestigungsabschnitt (11) einen nach oben gerichteten Abschnitt (18) aufweist.

7. Transportwagen (1) nach einem der Ansprüche 1 bis 6, **dadurch gekennzeichnet, daß** das wenigstens eine Sicherungsmittel (40) zwischen dem Schwenklager (30) und mindestens einem weiteren, an der Radgabel (21) vorgesehenen, zum Befestigen des Schwenklagers (30) bestimmten Stützmittel (43) eingespannt und gehalten ist.

8. Transportwagen (1) nach einem der Ansprüche 1 bis 7, **dadurch gekennzeichnet, daß** das Sicherungsmittel (40) durch eine gezahnte, aus Federstahl bestehende Scheibe gebildet ist, deren Zähne (41) radial nach innen gerichtet sind und eine Öffnung (42) bilden.

9. Transportwagen (1) nach einem der Ansprüche 1 bis 8, **dadurch gekennzeichnet, daß** das Sicherungsmittel (40) am Außenring (33) oder an der unteren Lagerscheibe (38) des Rollenlagers (35) anliegt.

10. Transportwagen (1) nach einem der Ansprüche 1 bis 9, **dadurch gekennzeichnet, daß** die Stützmittel (43) entweder durch einen aus der Innenwand des Lagergehäuses (25) der Radgabel (21) herausgearbeiteten Wulst oder durch kerbenartige Vorsprünge gebildet sind.

11. Transportwagen (1) nach einem der Ansprüche 1 bis 10, **dadurch gekennzeichnet, daß** die Zähne (41) des Sicherungsmittels (40) dazu bestimmt sind, in eine ringförmige Rille (19) eines Achsstückes (10) einzugreifen.

12. Transportwagen (1) nach einem der Ansprüche 1 bis 11, **dadurch gekennzeichnet, daß** die obere Innenfase (34) des Rillenkugellagers (31) oder des Rollenlagers (35) stärker gerundet oder abgeschrägt ist als die untere Innenfase (34').

## Claims

1. A trolley (1) movable by hand, the wheel frame (3) of which is provided with axle pieces (10) and each axle piece (10) is welded on the wheel frame (3) by a securing portion (11), wherein each axle piece (10) has a downwardly-directed axle portion (15) located on a vertical axis (26), wherein a caster (20) is put on each axle portion (15) and is secured against detachment by a resilient retaining means (40), and wherein the cross-section of each securing portion (11) is greater than the cross-section of the adjacent axle portion (15), **characterised in that** the casters (20) are in the form of pre-fabricated components whose swivel bearings (30) are in the form of grooved ball bearings (31) or roller bearings (35), **in that** each caster (20) is arranged so as to movable up and down by a minimal amount along the vertical axis (26), and **in that** the retaining means (40) are intended to automatically lock with the axle pieces (10).

2. A trolley (1) according to Claim 1, **characterised in that** in the case of spot welding of the axle pieces (10) to the wheel frame (3), the intervals between the welds (9) are larger than the diameter of the axle portion (15).

3. A trolley (1) according to Claim 1, **characterised in that** in the case of welding of the axle pieces (10) to the wheel frame (3) by at least one weld seam per axle piece (10), the length of the at least one weld seam is greater than the diameter of the axle portion (15).

4. A trolley (1) according to any one of Claims 1 to 3, **characterised in that** elevations (12) are provided on the securing portion (11) and are intended to form the welds (9).

5. A trolley (1) according to any one of Claims 1 to 4, **characterised in that** the securing portion (11) is disc-shaped.

6. A trolley (1) according to any one of Claims 1 to 4, **characterised in that** the securing portion (11) has an upwardly-directed portion (18).

7. A trolley (1) according to any one of Claims 1 to 6, **characterised in that** the at least one retaining means (40) is fitted and held between the swivel bearing (30) and at least one further supporting means (43) which is provided at the wheel fork (21) and which is intended to secure the swivel bearing (30).

8. A trolley (1) according to any one of Claims 1 to 7, **characterised in that** the retaining means (40) is formed by a toothed disc which is made of spring steel and whose teeth (41) are directed radially inwards and form an opening (42).

9. A trolley (1) according to any one of Claims 1 to 8, **characterised in that** the retaining means (40) contacts the outer ring (33) or the lower bearing-disc (38) of the roller bearing (35).

10. A trolley (1) according to any one of Claims 1 to 9, **characterised in that** the supporting means (43) are formed either by a swelling worked from the inside wall of the bearing housing (25) of the wheel fork (21) or by indentations.

11. A trolley (1) according to any one of Claims 1 to 10, **characterised in that** the teeth (41) of the retaining means (40) are intended to engage an annular groove (19) of an axle piece (10).

12. A trolley (1) according to any one of Claims 1 to 11, **characterised in that** the upper inner bevel (34) of the grooved ball bearing (31) or the roller bearing (35) is more rounded or bevelled than the lower inner bevel (34').

## Revendications

1. Chariot de transport (1) déplaçable à la main, dont le châssis de roulement (3) est équipé de bouts d'arbres (10), chaque bout d'arbre (10) étant rapporté par soudage sur le châssis de roulement (3) à l'aide d'une région de fixation (11), chaque bout d'arbre (10) présentant un segment d'axe (15) dirigé vers le bas et placé sur un axe vertical (26), sachant qu'une roulette directrice (20) est emboîtée sur chaque segment d'axe (15) et est empêchée de se dissocier grâce à un moyen d'arrêt (40) doué de souplesse élastique, et que la section transversale de chaque région de fixation (11) est plus grande que la section transversale du segment d'axe (15) attenant, **caractérisé par le fait que** les roulettes directrices (20) se présentent comme des ensembles structurels unitaires achevés, dont les paliers de pivotement (30) sont réalisés sous la forme de roulements rainurés (31) à billes, ou de paliers (35) à rouleaux ; **par le fait que** chaque roulette directrice (20) est agencée à mouvement ascendant et descendant d'une course minimale, le long de l'axe vertical (26) ; et **par le fait que** les moyens d'arrêt (40) sont destinés à l'encliquetage automatique avec les bouts d'arbres (10).

2. Chariot de transport (1) selon la revendication 1, **caractérisé par le fait que**, dans le cas d'un soudage par points rapportant les bouts d'arbres (10) sur le châssis de roulement (3), les distances séparant les zones de soudage (9) sont plus grandes que le diamètre du segment d'axe (15).

3. Chariot de transport (1) selon la revendication 1, **caractérisé par le fait que**, dans le cas où les bouts d'arbres (10) sont rapportés sur le châssis de roulement (3) à raison d'au moins un cordon de soudure pour chaque bout d'arbre (10), la longueur du cordon de soudure prévu au minimum est plus grande que le diamètre du segment d'axe (15).

4. Chariot de transport (1) selon l'une des revendications 1 à 3, **caractérisé par le fait que** des protubérances (12), prévues sur la région de fixation (11), sont destinées à former les zones de soudage (9).

5. Chariot de transport (1) selon l'une des revendications 1 à 4, **caractérisé par le fait que** la région de fixation (11) est de configuration discoïdale.

6. Chariot de transport (1) selon l'une des revendications 1 à 4, **caractérisé par le fait que** la région de fixation (11) présente un tronçon (18) dirigé vers le haut.

7. Chariot de transport (1) selon l'une des revendications 1 à 6, **caractérisé par le fait que** le moyen d'arrêt (40), prévu au minimum, est bloqué et retenu entre le palier de pivotement (30) et au moins un moyen supplémentaire d'appui (43) prévu sur la fourche (21) de la roue, et destiné à fixer ledit palier de pivotement (30).

8. Chariot de transport (1) selon l'une des revendications 1 à 7, **caractérisé par le fait que** le moyen d'arrêt (40) est formé d'un disque denté en acier à ressorts, dont les dents (41) sont orientées radialement vers l'intérieur et forment une ouverture (42).

9. Chariot de transport (1) selon l'une des revendications 1 à 8, **caractérisé par le fait que** le moyen d'arrêt (40) est appliqué contre la bague extérieure (33) ou contre le disque inférieur de portée (38) du palier (35) à rouleaux.

10. Chariot de transport (1) selon l'une des revendications 1 à 9, **caractérisé par le fait que** les moyens d'appui (43) sont formés soit par un bourrelet usiné depuis la paroi intérieure du carter de portée (25) de la fourche (21) de la roue, soit par des saillies du type encoches.

11. Chariot de transport (1) selon l'une des revendications 1 à 10, **caractérisé par le fait que** les dents (41) du moyen d'arrêt (40) sont destinées à pénétrer dans une rainure annulaire (19) d'un bout d'arbre (10).

12. Chariot de transport (1) selon l'une des revendications 1 à 11, **caractérisé par le fait que** le chanfrein intérieur supérieur (34) du roulement rainuré (31) à billes, ou du palier (35) à rouleaux, est plus fortement arrondi ou biseauté que le chanfrein intérieur inférieur (34').
